# DEMANDE DE BREVET EUROPEEN

(11) **EP 3 882 082 A1**
(43) Date de publication de la demande: **22.09.2021**
(21) Numéro de dépôt: 21161915.0
(22) Date de dépôt: 11.03.2021
(51) Int. Cl.: B60R 7/10

(54) **VÉHICULE À BRAS PIVOTANT AMÉLIORÉ**

(30) Priorité: 16.03.2020 FR 2002559
(71) Demandeur: RENAULT s.a.s., 92100 Boulogne-Billancourt (FR)
(72) Inventeur: CHABASSOL, Ludovic, 28210 COULOMBS (FR)

(57) **Abrégé**

Véhicule (10) comprenant un coffre (12) et un habitacle qui comprennent chacun une ou plusieurs parois verticales ou sensiblement verticales (14) délimitant partiellement l'espace interne audit coffre et audit habitacle, l'au moins un bras (18) étant monté sur une paroi du coffre et/ou de l'habitacle et étant apte à passer d'une position rangée contre ladite paroi à au moins une position déployée qui fait saillie par rapport à ladite paroi (14) ou inversement, le passage d'une position à l'autre étant effectué par un soulèvement dudit au moins un bras le long d'un axe vertical ou sensiblement vertical, suivi d'un pivotement autour dudit axe, ledit au moins un bras comprenant des moyens d'accrochage (18d-e) destinés à fixer un ou plusieurs objets.

## Description

La présente invention concerne un véhicule qui comprend un coffre et un habitacle.

Généralement, un coffre de véhicule se situe dans la partie arrière du véhicule et définit un espace libre de rangement permettant d'entreposer un certain nombre d'objets assez souvent hétéroclites. Il arrive que les objets entreposés dans le coffre ne remplissent pas la totalité de cet espace de rangement, soit parce qu'ils ne sont pas assez nombreux, soit parce qu'ils ne sont pas suffisamment volumineux. Dans ce type de situation, il n'est donc pas rare de voir ces objets se déplacer de manière aléatoire dans le coffre, avec pour conséquence la génération de bruit désagréables liés à des chocs répétés contre les parois du coffre, le mélange ou l'endommagement de ces objets ou bien l'ouverture intempestive de sacs ou de récipients.

Au vu de ces inconvénients il serait donc particulièrement utile de pouvoir stabiliser des objets à l'intérieur du coffre, avec une grande flexibilité en ce qui concerne le type et les dimensions de ces objets. Il serait également utile de pouvoir faire de même pour des objets entreposés à l'intérieur de l'habitacle du véhicule.

L'invention a ainsi pour objet un véhicule comprenant un coffre et un habitacle qui comprennent chacun une ou plusieurs parois verticales ou sensiblement verticales délimitant partiellement l'espace interne audit coffre et audit habitacle, caractérisé en ce qu'au moins un bras est monté sur une paroi du coffre et/ou de l'habitacle et est apte à passer d'une position rangée contre ladite paroi à au moins une position déployée qui fait saillie par rapport à ladite paroi ou inversement, le passage d'une position à l'autre étant effectué par un soulèvement dudit au moins un bras le long d'un axe vertical ou sensiblement vertical, suivi d'un pivotement autour dudit axe, ledit au moins un bras comprenant des moyens d'accrochage destinés à fixer un ou plusieurs objets.

L'agencement prévu dans le coffre permet de stabiliser de manière particulièrement simple et efficace dans l'espace interne au coffre des objets de formes et de tailles différentes qui, en l'absence d'un tel agencement, seraient entreposés n'importe comment dans cet espace et seraient en outre susceptibles de se déplacer à l'intérieur de cet espace lorsque le véhicule est en mouvement, générant ainsi les désagréments constatés plus haut. Le passage du bras d'une position à l'autre est réalisé de manière très simple par un utilisateur puisqu'il permet par un simple soulèvement de déverrouiller le bras qui était dans une position basse verrouillée parfaitement stable, qu'il s'agisse de la position basse de rangement ou d'une position basse déployée. Le mouvement de pivotement du bras qui suit son soulèvement permet ensuite de positionner le bras dans une position déployée, parmi plusieurs positions déployées possibles, ce qui permet une grande souplesse dans le rangement des objets à l'intérieur du coffre en fonction de leur type (objets hétéroclites...) et notamment en fonction de leurs formes et de leurs dimensions spécifiques. On notera que l'agencement d'un bras sur une paroi de l'habitacle procure également les mêmes avantages que ceux décrits ci-dessus.

Selon d'autres caractéristiques possibles :
- ledit au moins un bras est monté sur la paroi par l'intermédiaire d'un ensemble mécanique comprenant au moins une pièce élastiquement déformable qui exerce un effort axial vertical descendant de rappel, tendant à maintenir axialement ledit au moins un bras en position basse verrouillée, le passage d'une position à l'autre nécessitant d'exercer un effort axial ascendant externe de déverrouillage de manière à compenser ledit effort axial de rappel et à soulever ledit au moins un bras avant d'exercer un mouvement de pivotement;
- ladite au moins une pièce élastiquement déformable est un ressort;
- la paroi comporte un support sur lequel ledit au moins un bras est monté en appui vertical dans une position basse verrouillée, ledit au moins bras étant accouplé axialement avec ledit support dans ladite position basse verrouillée par l'intermédiaire d'une liaison mécanique de type tenon-mortaise d'axe vertical ou sensiblement vertical qui empêche le pivotement dudit au moins un bras par rapport au support, l'effort axial ascendant de déverrouillage permettant de désaccoupler axialement ledit au moins bras du support et ainsi d'autoriser un pivotement par rapport audit support avant de pouvoir le verrouiller dans une autre position basse;
- après pivotement dudit au moins bras par rapport audit support, ledit au moins un bras est apte à être réaccouplé axialement avec ledit support par l'intermédiaire de la liaison mécanique de type tenon-mortaise afin de verrouiller ledit au moins un bras dans une position déployée;
- la liaison mécanique de type tenon-mortaise comprend au moins un élément saillant suivant un axe vertical ou sensiblement vertical qui est solidaire d'une des deux pièces que sont ledit au moins bras et le support, ledit au moins un élément saillant étant apte à être engagé axialement dans un évidement axial de l'autre pièce qui est axialement en regard de l'élément saillant parmi plusieurs évidements axiaux de l'autre pièce, les évidements axiaux étant répartis sur l'autre pièce selon une trajectoire circulaire suivant une vue en projection dans un plan perpendiculaire à l'axe vertical ou sensiblement vertical, l'écart angulaire entre deux évidements axiaux consécutifs définissant l'angle de pivotement dudit au moins un bras entre deux positions consécutives de ce dernier ;
- ledit au moins un élément saillant comporte deux faces opposées qui s'étendent globalement en éloignement axial de la pièce qui porte ledit au moins un élément saillant et possèdent chacune une disposition radiale relativement à la répartition circulaire des évidements axiaux, chacune des deux faces opposées étant inclinée en direction de leur extrémité libre de manière à former au moins une rampe destinée à coopérer avec une face correspondante de l'évidement axial en regard de l'autre pièce ;
- ledit au moins un bras est apte à occuper une position géométrique parmi plusieurs positions géométriques possibles, le nombre et les orientations angulaires des positions géométriques possibles dépendant du nombre et de la position dudit au moins un élément saillant d'une pièce et des évidements axiaux de l'autre pièce ;
- le support forme une charnière pour ledit au moins un bras et comporte, d'une part, une première portion inférieure sur laquelle ledit au moins un bras est en appui dans la position basse verrouillée et au niveau de laquelle la liaison de type tenon-mortaise est agencée et, d'autre part, une deuxième portion supérieure disposée à l'aplomb verticalement de la première portion inférieure, ledit au moins un bras étant monté entre les deux portions inférieure et supérieure du support par l'intermédiaire d'une tige axiale qui traverse ledit au moins un bras et dont les deux extrémités opposées sont respectivement engagées dans les deux portions inférieure et supérieure dudit support ;
- la pièce élastiquement déformable est disposée autour ou le long de la tige axiale en prenant appui sur deux surfaces en regard respectivement de la dite tige axiale et dudit au moins un bras de manière à être déformée axialement en compression lorsque ledit au moins un bras subit un effort axial ascendant externe et à s'étendre axialement pour reprendre sa position non déformée lorsque l'effort axial ascendant externe cesse ;
- une pièce de masquage recouvre la zone de montage dudit au moins un bras sur la paroi, une partie de la pièce de masquage étant ajourée pour permettre sa mise en place autour dudit au moins un bras ;
- le véhicule comporte une interface de fixation dudit au moins un bras sur la paroi et la caisse du véhicule.

### Brève description des dessins

D'autres caractéristiques et avantages possibles vont maintenant être décrits, de manière illustrative et non limitative en référence aux dessins annexés, sur lesquels:
[Fig. 1A] La Figure 1A est une vue partielle en perspective d'un coffre d'un véhicule selon un mode de réalisation de l'invention, pour lequel un bras est en position rangée contre une paroi du coffre ;
[Fig. 1B] La Figure 1B est une vue partielle en perspective du coffre de la figure 1A montrant le bras en position déployée ;
[Fig. 2A] La Figure 2A représente la partie structurelle du bras des figures 1A-B;
[Fig. 2B] La Figure 2B représente une première demi-coquille qui entre dans la constitution du bras des figures 1A-B ;
[Fig. 2C] La Figure 2C représente la partie structurelle du bras assemblé avec la première demi-coquille ;
[Fig. 2D] La Figure 2D représente une deuxième demi-coquille qui entre dans la constitution du bras des figures 1A-B ;
[Fig. 2E] La Figure 2E représente le bras en cours d'assemblage ;
[Fig. 2F] La Figure 2F représente le bras assemblé ;
[Fig. 3A] La Figure 3A représente le bras assemblé avant sa mise en place sur un support ;
[Fig. 3B] La Figure 3B représente le support du bras ;
[Fig. 3C] La Figure 3C représente le bras mis en place sur son support ;
[Fig. 3D] La Figure 3D représente la fixation du bras sur le support ;
[Fig. 3E] La Figure 3E représente le bras monté est fixé sur son support ;
[Fig. 4A] La Figure 4A représente une vue en coupe du bras en position rangée contre la paroi latérale 14 ;
[Fig. 4B] La Figure 4B représente une vue agrandie partielle de la partie supérieure du bras et du support ;
[Fig. 4C] La Figure 4C représente une vue agrandie partielle de la partie inférieure du bras et du support ;
[Fig. 5A] La Figure 5A représente une vue en cours d'assemblage d'une pièce de masquage sur le support du bras ;
[Fig. 5B] La Figure 5B représente la pièce de masquage monté sur le support du bras ;
[Fig. 6A] La Figure 6A représente dans un premier plan de coupe l'ensemble bras-support-pièce de masquage en cours de montage sur la paroi latérale du véhicule ;
[Fig. 6B] La Figure 6B représente dans un deuxième plan de coupe l'ensemble bras-support-pièce de masquage en cours de montage sur la paroi latérale du véhicule ;
[Fig. 6C] La Figure 6C représente dans le deuxième plan de coupe l'ensemble bras-support-pièce de masquage monté est fixé à la paroi latérale véhicule ;
[Fig. 7A] La Figure 7A représente un exemple possible d'éléments saillants pour la liaison de type tenon-mortaise entre le bras et son support ;
[Fig. 7B] La Figure 7B représente un exemple possible d'évidements axiaux pour la liaison de type tenon-mortaise entre le bras et son support ;
[Fig. 8] La Figure 8 représente les différentes phases (cinématique) de mise en mouvement du bras entre une position basse verrouillée et une position basse verrouillée consécutive.

### Description de mode(s) de réalisation

La description qui va suivre fait référence à un repère orthonormé direct XYZ dans lequel X est un axe longitudinal avant-arrière du véhicule orienté vers l'arrière, Y est un axe transversal orienté vers la droite du véhicule et Z est un axe vertical dirigé vers le haut.

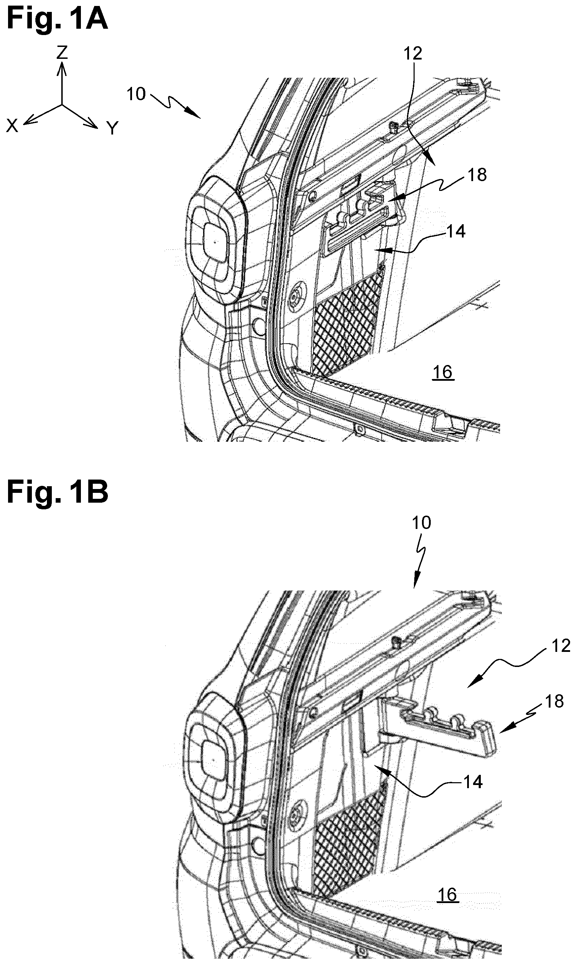

Comme représenté sur les figures 1A et 1B, un véhicule 10 selon un mode de réalisation de l'invention comprend un coffre 12 qui est délimité par deux parois latérales dont une seule référencée 14 est représentée, par un fond 16 et par une paroi arrière non représentée qui est solidarisée à des dossiers d'une rangée arrière de sièges également non représentée. Les deux parois latérales sont parallèles, en vis-à-vis, l'une de l'autre, généralement symétriques l'une par rapport à l'autre, et s'étendent chacune dans un plan vertical ou sensiblement vertical qui est aligné suivant l'axe longitudinal X du véhicule. La paroi arrière s'étend généralement dans un plan transversal Y du véhicule et est légèrement inclinée par rapport à un plan vertical. Le fond 16 du coffre s'étend, quant à lui, dans un plan horizontal lorsque le véhicule est lui-même placé sur un sol horizontal.

Comme représenté sur les figures 1A et 1B, le coffre du véhicule comprend au moins un bras (préférentiellement réalisé en plastique) dont un seul référencé 18 est représenté monté dans la paroi latérale 14. Cette paroi peut également comporter un ou plusieurs autres bras selon les dimensions de la paroi. On notera que l'autre paroi latérale en vis-à-vis non représentée peut également porter un ou plusieurs autres bras.

Plus particulièrement, le bras 18 (la description qui va suivre s'applique également aux autres bras mentionnés ci-dessus) est monté pivotant autour d'un axe de rotation vertical solidarisé à la paroi latérale 14 et peut ainsi passer d'une position rangée pour laquelle il est placé contre la paroi latérale 14 (figure 1A) à une position déployée pour laquelle il est écarté de la position rangée (et fait saillie par rapport à la paroi). Dans la position déployée qui est représentée ici, le bras s'étend selon un axe transversal Y du véhicule (figure 1B). Toutefois, le bras peut s'étendre dans une ou plusieurs autres positions déployées, de manière non représentée, selon un axe différent qui est, par exemple, agencé entre les axes X et Y ou bien au-delà de l'axe Y. On notera que plusieurs positions déployées du bras sont envisageables et atteignables en effectuant un mouvement de pivotement du bras à partir de la position rangée déverrouillée et suivant différents angles de rotation correspondant chacun à une position géométrique déployée possible.

Dans la position rangée de la figure 1A, le bras 18 est logé dans un renfoncement de la paroi latérale 14 et s'étend donc suivant un axe longitudinal X du véhicule. On notera que plusieurs positions géométriques déployées du bras sont envisageables en effectuant un mouvement de pivotement du bras à partir de la position rangée déverrouillée et suivant différents angles de rotation correspondant chacun à une position géométrique déployée possible, l'angle de rotation correspondant à l'angle formé entre l'axe X et l'axe de déploiement du bras (il en est de même à partir d'une position déployée déverrouillée pour passer à une autre position déployée).

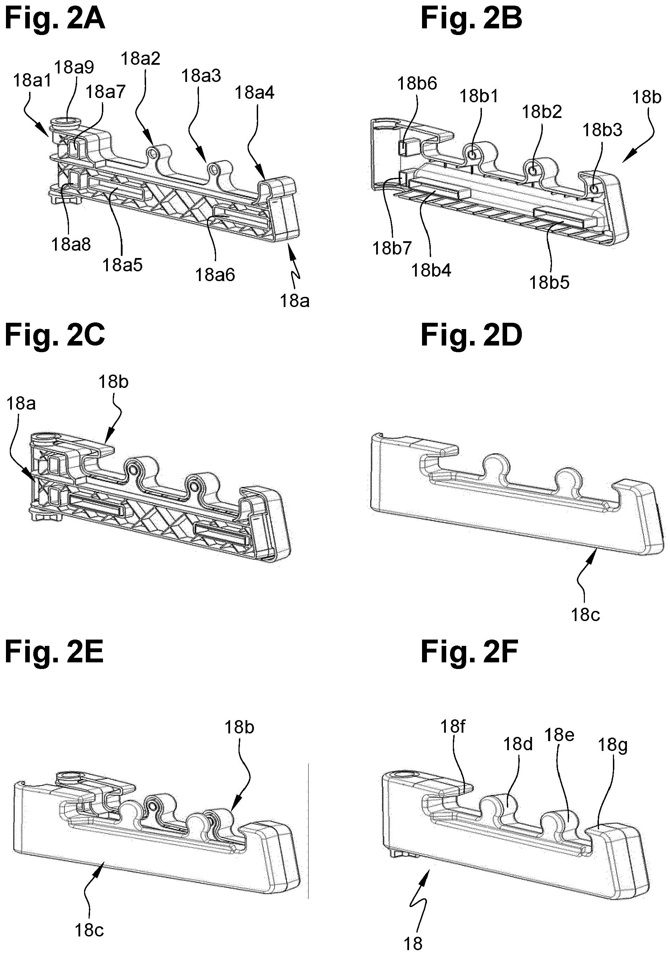

Les figures 2A à 2F illustrent les différents éléments constitutifs du bras 18 et l'assemblage de ce bras à partir de ces éléments.

Le bras 18 comprend une partie structurelle interne 18a qui est une pièce assurant la tenue mécanique du bras (fig. 2A). Cette pièce 18a est nervurée transversalement pour apporter la rigidification nécessaire et tenir la charge mécanique à laquelle le bras peut être soumis lorsque des objets seront accrochés dessus. La pièce 18a a une forme générale allongée qui comporte à sa base 18a1 un palier qui définit l'axe de rotation/pivotement du bras. La forme allongée du bras s'étend en éloignement de cette base et comporte sur la face supérieure du bras des organes saillants 18a2-18a4 longitudinalement espacés et traversés dans leur épaisseur par des orifices traversants.

Le bras 18 comporte également en dessous des organes saillants, dans sa partie centrale, deux lumières traversantes 18a5, 18a6 suivant une direction perpendiculaire au plan vertical contenant l'axe d'extension longitudinale du bras (autrement dit suivant l'épaisseur ou la largeur du bras).

De même, le bras 18 comporte, au niveau de sa base 18a1, deux ouvertures traversantes 18a7, 18a8 disposées l'une au-dessus de l'autre et de même orientation latérale que les lumières traversantes 18a5, 18a6.

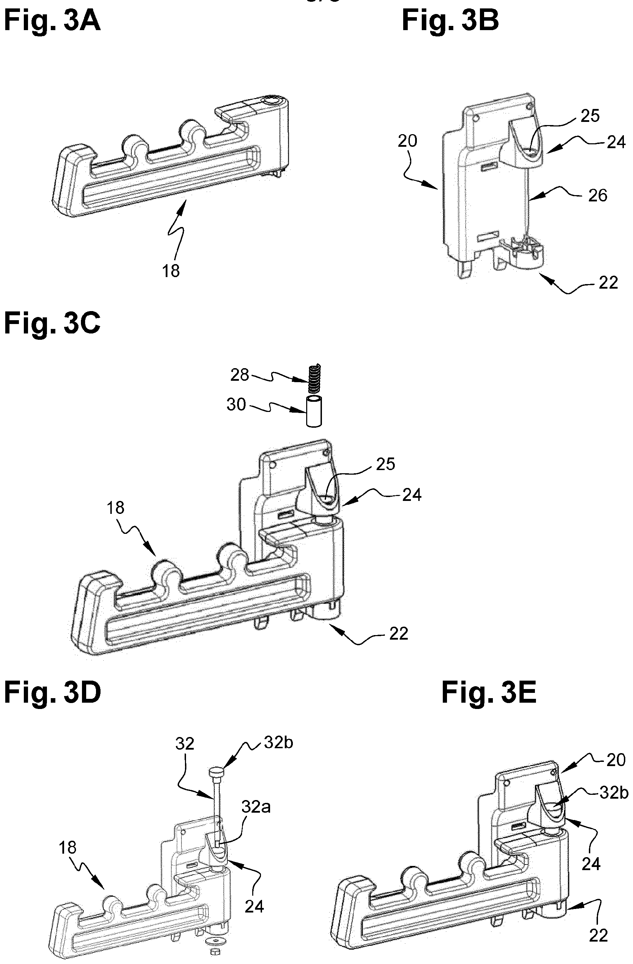

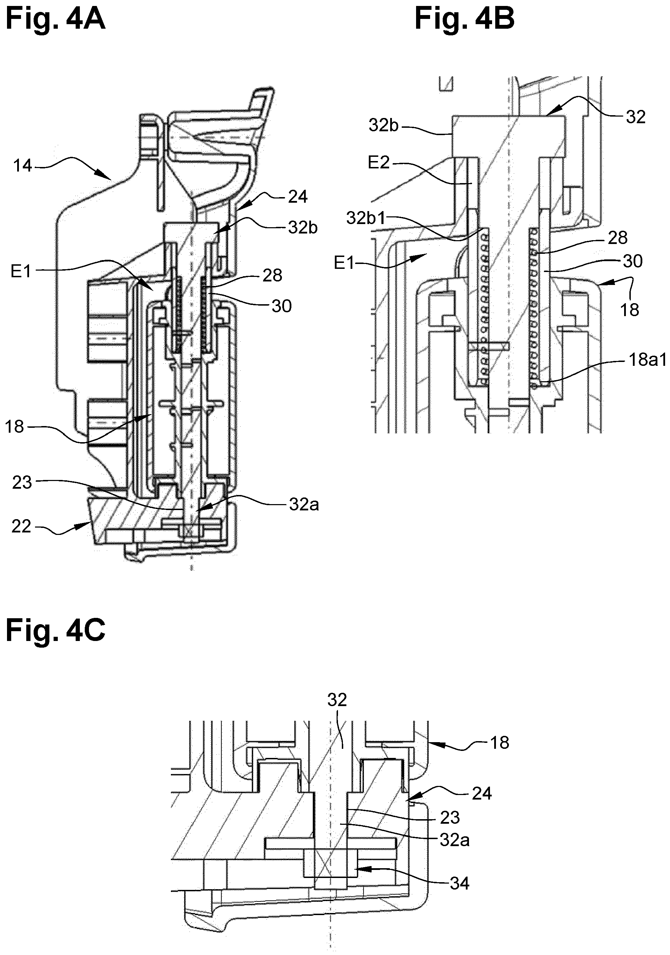

Le palier de la base 18a1 est agencé verticalement. Il est creux et présente à sa partie supérieure une ouverture 18a9 par laquelle sera introduit notamment l'axe de pivotement du bras comme décrit ultérieurement en référence aux figures 3A-E et 4A-C.

Le bras 18 comprend également une première demi-coquille 18b de forme générale correspondant à celle de la partie centrale 18a mais de dimensions légèrement supérieures afin de pouvoir y loger partiellement la partie centrale 18a. La première demi-coquille 18b est fermée par une paroi de fond d'un côté et est ouverte du côté opposé qui est représenté sur la figure 2B pour recevoir la partie centrale 18a.

La première demi-coquille 18b comporte plusieurs organes protubérants 18b1 -18b7 qui s'étendent en éloignement à partir de la paroi de fond et présentent tous des formes complémentaires et des agencements correspondants à ceux des ouvertures, lumières et orifices de la partie centrale 18a décrits ci-dessus afin de pouvoir s'y insérer lorsque cette dernière est assemblée contre la demi-coquille 18b, réalisant ainsi un assemblage par des liaisons de type tenon-mortaise.

Comme représenté sur la figure 2D, le bras 18 comprend également une deuxième demi-coquille 18c de forme complémentaire de celle de la première demi-coquille 18b afin de s'assembler mécaniquement, par exemple par clipsage, avec l'ensemble formé de la partie centrale 18a assemblé avec la première demi-coquille 18b et qui est représenté sur la figure 2C. La partie centrale structurelle 18a forme ainsi en quelque sorte un noyau central rigide emprisonné entre deux demi-coquilles formant couvercle ou capotage. La figure 2E représente l'assemblage de l'ensemble de la figure 2C avec la deuxième demi-coquille 18c.

La figure 2F représente le bras assemblé dont la partie supérieure présente un découpage de manière à faciliter l'accrochage d'objets. Plus particulièrement, la partie supérieure découpée comporte, entre ses deux extrémités opposées, des plots ou organes d'accrochage 18d, 18e pour l'accrochage d'objets ainsi que deux retours 18f, 18g orientés en direction des plots d'accrochage afin de réduire les dimensions des espaces laissés libres entre chaque plot et l'extrémité correspondante du bras. Les plots d'accrochage ont ici une forme élargie à leur sommet et rétrécie à leur base (forme de bulbe) pour permettre un accrochage fiable et empêcher un décrochage trop aisé des objets lors du mouvement du véhicule. Chaque retour de la partie supérieure du bras qui réduit l'ouverture entre le plot et l'extrémité du bras considérée contribue aussi à maintenir en place l'objet accroché à ou l'autre des plots. La forme de ces organes peut varier et différer de celle illustrée sur les figures.

Les figures 3A-E illustrent le montage du bras 18 sur un support 20 de la paroi latérale 14 et les figures 4A-C illustrent des particularités de montage du bras sur son support.

Le bras 18 de la figure 3A qui a été assemblé comme décrit ci-dessus est ensuite monté sur le support 20 de la figure 3B comme représenté sur la figure 3C. Le support 20 forme une charnière pour le bras 18 et, à cet effet, il comporte deux portions 22 et 24 disposées l'une au-dessus de l'autre dans l'alignement d'un axe vertical qui va définir l'axe de pivotement du bras. Les deux portions 22 et 24 sont formées en saillie à partir d'une pièce 26 formant un socle.

La première portion inférieure 22 forme un appui inférieur pour le bras 18 lorsque ce dernier est placé en position basse verrouillée (la portion 22 est percée d'un orifice traversant vertical 23 représenté sur la figure 4A) et la deuxième portion supérieure 24 percée d'un orifice traversant vertical 25 est disposée à l'aplomb de la première portion 22.

Le bras 18 est disposé entre les deux portions inférieure et supérieure 22 et 24, comme illustré sur la figure 3C. Une pièce élastiquement déformable 28 telle qu'un ressort, est insérée à l'intérieur d'un fourreau 30 et l'ensemble est introduit verticalement dans l'orifice traversant 25 pour venir s'insérer dans l'ouverture 18a9 du palier de la base 18a1 (fig. 2A). Alternativement, chaque pièce est introduite séparément dans l'orifice traversant et l'ouverture.

Comme représenté sur la figure 3D, une tige axiale 32 munie d'un épaulement à sa tête est introduite verticalement dans l'orifice traversant 25 et est ensuite inséré à travers l'ouverture 18a9 de la base du bras pour traverser ce dernier suivant sa hauteur afin que les deux extrémités opposées 32a, 32b de la tige 32 soient respectivement engagées dans les deux portions inférieure 22 et supérieure 24 du support. L'extrémité inférieure 32a munie d'un épaulement traverse l'orifice 23 de la portion inférieure 22 (figure 4A) en étant retenue axialement par l'épaulement et fait saillie en dessous de la portion inférieure 22 où un dispositif de fixation 34 est prévu pour empêcher le retrait axial ascendant de la tige. Cette tige peut être filetée et le dispositif de fixation 34 peut alors être formé d'une rondelle et un écrou comme illustré sur les figures 3D et 4C. L'extrémité supérieure 32b portant la tête de la tige repose sur les bords de l'ouverture de l'orifice traversant 25, comme représenté sur les figures 4A et 4B, et vient comprimer le ressort 28 à l'intérieur du fourreau 30.

La figure 3E représente le bras en position montée sur le support 20 par l'intermédiaire d'une liaison pivot ou charnière.

Comme représenté plus en détails sur les figures 4A et 4B, la pièce élastiquement déformable (ex : ressort) 28, agencée ici autour de la tige axiale, est maintenue étendue axialement entre la surface annulaire saillante 32b1 de l'épaulement supérieur de la tige axiale et une surface inférieure en regard d'un épaulement interne 18a10 du palier du bras 18.

Lorsque le bras 18 est assemblé sur son support, par exemple, en position rangée comme sur les figures 3D, 3E et 4A-C, le bras est en position basse verrouillée et un espace supérieur axial E1 (fig. 4A) est laissé libre entre la face supérieure du bras et la face inférieure de la portion supérieure 24 du support 20. De même, un espace supérieur axial E2 (fig. 4B) est laissé libre entre la partie supérieure du fourreau 30 et la face inférieure de la tête de la tige axiale 32. Ces espaces supérieurs axiaux (ici verticaux) autorisent un soulèvement vertical du bras par rapport à son support, pour passer d'une position basse verrouillée à une position de pivotement (lors de ce soulèvement le ressort 28 sera comprimé axialement), comme cela sera expliqué par la suite. Dans cette position basse, le fourreau 30 fait office de cache et masque ainsi le ressort 28.

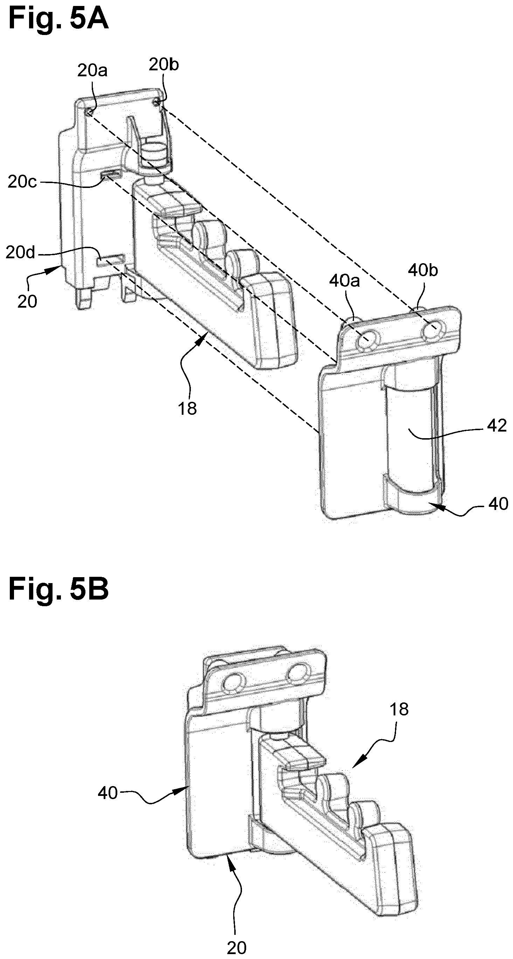

Les figures 5A et 5B illustrent la mise en place d'une pièce de masquage optionnelle (enjoliveur) 40 qui est ajourée pour permettre d'être traversée par le bras 18 en position déployée à 90°à travers l'ouverture 42 de la pièce (fig. 5A) et aboutir ainsi à la configuration de la figure 5B dans laquelle la pièce de masquage 40 recouvre la zone de montage du bras sur support 20. La pièce de masquage est par exemple en matière plastique. La figure 5A illustre différents moyens de fixation complémentaires (fentes 20c-d et éléments saillants complémentaires non visibles sur la pièce de masquage) par clipsage de la pièce de masquage sur le support 20. On notera que la pièce de masquage comporte en partie haute deux éléments saillants creux formant tétons 40a-b parallèles entre eux et qui sont positionnés contre deux perçages 20a-b correspondant du support lorsque la pièce de masquage est mise en place sur le support.

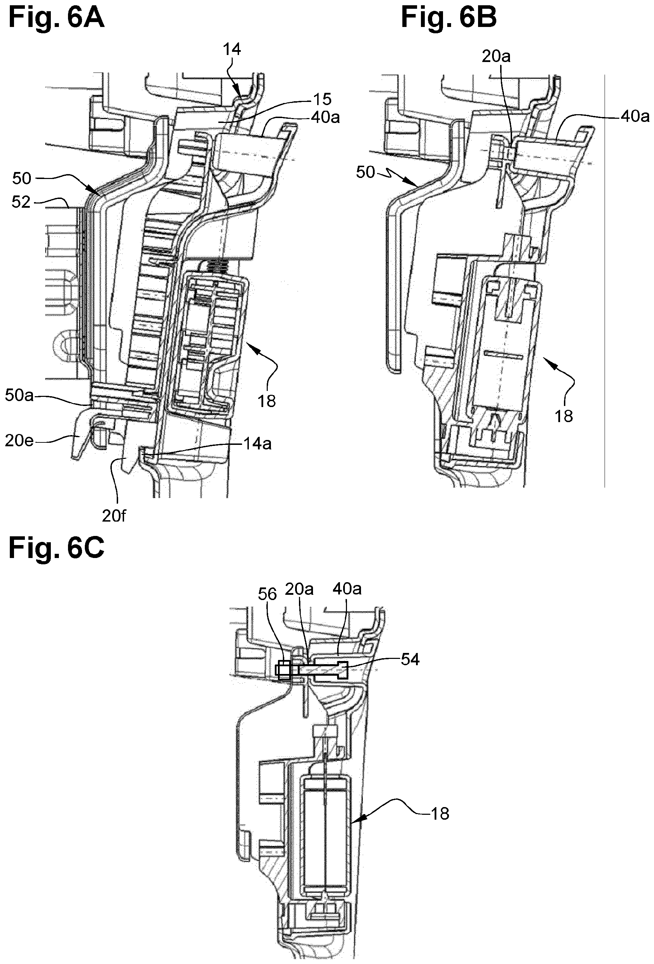

Comme représenté sur les figures 6A-C qui sont des coupes verticales selon un plan transversal contenant l'axe Y, l'ensemble formé du bras 18 de son support 20 et de la pièce de masquage 40 (optionnelle) est monté dans la paroi latérale 14 à travers une ouverture traversante 15 pratiquée dans celle-ci afin d'être fixé à une interface de fixation du véhicule. L'interface de fixation est formée par des pièces de tôlerie 50 et 52 qui sont solidarisées à la caisse du véhicule.

Comme représenté sur la figure 6A, l'ensemble bras-support-pièce de masquage est d'abord engagé par sa partie inférieure dans l'ouverture traversante de la paroi latérale 14 afin que des organes d'accrochage 20e-f formant des doigts ou becs d'accrochage soient engagés par-dessus un rebord respectivement d'une ouverture inférieure 50a de la pièce de tôlerie 50 et du bord inférieur 14a de l'ouverture traversante de la paroi latérale 14. La partie supérieure de la pièce de masquage comporte les deux éléments saillants 40a-b creux qui sont disposés dans l'alignement des perçages 20a-b du support et qui, dans la position de la figure 6A, ne sont pas encore fixés au véhicule.

Les figures 6B et 6C représentent des plans de coupe différents montrant l'intérieur de l'élément creux 40a et du perçage correspondant 20a (il en est de même pour l'élément creux 40b contre le perçage correspondant 20b non visibles dans ce plan de coupe) et la fixation de la partie supérieure de l'ensemble bras-support-pièce de masquage sur la pièce de tôlerie 50. Cette fixation est réalisée par l'intermédiaire d'un dispositif de fixation tel qu'une vis 54 et un écrou 56, la vis 54 étant engagée à l'intérieur de l'élément creux 40a, du perçage 20a correspondant et d'un trou traversant correspondant dans la partie supérieure de la pièce de tôlerie 50.

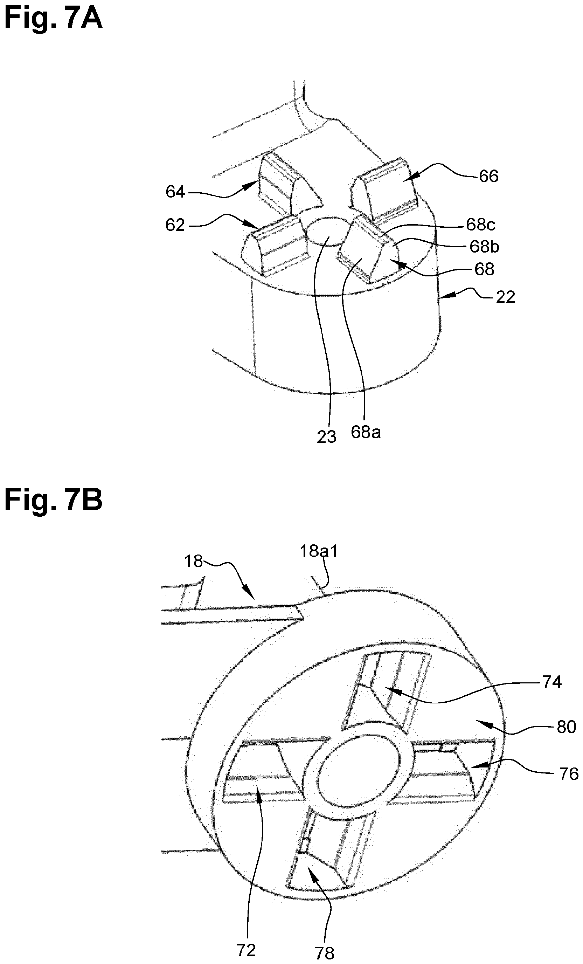

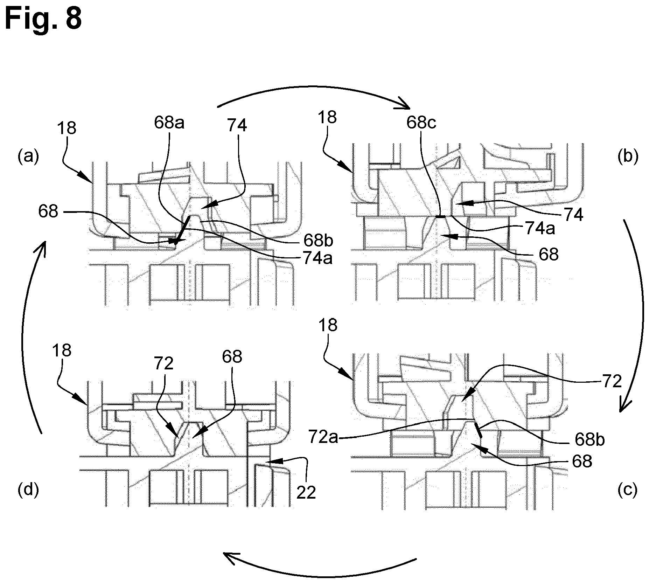

Les figures 7A-B et 8 illustrent le mécanisme permettant au bras 18 de passer d'une position basse verrouillée à une autre position basse verrouillée, chaque position basse pouvant correspondre à la position de rangement ou à une position déployée.

Les figures 7A et 7B représentent un exemple possible d'accouplement axial entre le bras 18 et son support 20 par l'intermédiaire d'une liaison mécanique de type tenon-mortaise. Dans cet exemple de réalisation, les éléments formant tenons sont solidaires du support et ceux formant mortaises sont solidaires du bras mais l'inverse peut être envisagé. Plus particulièrement, les éléments formant tenons agencés sur la portion inférieure 22 du support et les éléments formant mortaises agencées dans la partie inférieure de la base 18a1 du bras, dans l'alignement du palier de celui-ci. Ces éléments de formes complémentaires les uns par rapport aux autres permettent, lorsqu'ils sont engagés axialement les uns dans les autres (accouplement axial du bras du support), de verrouiller le bras dans une position basse (position rangée ou position déployée) et lorsqu'ils sont désengagés les uns des autres (position soulevée/haute et déverrouillée), de déverrouiller le bras et d'autoriser un mouvement de pivotement pour atteindre une autre position géométrique possible pour ledit bras.

Comme représenté sur la figure 7A, la portion inférieure 22 du support comporte une pluralité d'éléments saillants 62, 64, 66, 68 (par exemple en forme d'ergots) qui s'étendent axialement en éloignement de la face supérieure horizontale de cette portion (perpendiculaire à l'axe vertical) et qui sont répartis de manière régulière sur cette face autour du trou traversant 23 suivant une trajectoire circulaire. Ici, le nombre d'éléments saillants est de quatre et ils sont disposés à 90°l'un de l'autre.

Comme représenté sur la figure 7B, la partie inférieure du palier du bras comporte une pluralité d'évidements axiaux 72, 74, 76, 78 de formes quasi-complémentaires à celles des éléments saillants et en nombre et en correspondance géométrique avec ces derniers.

Dans cet exemple de réalisation, l'écart angulaire entre deux évidements axiaux consécutifs définis l'angle de pivotement possible (angle minimal) du bras entre deux positions géométriques consécutives de ce dernier. Ici, l'écart angulaire est de 90°, ce qui définit deux positions géométriques possibles pour le bras : une première position rangée et une position déployée à 90°. Avec un écart angulaire inférieur entre deux évidements axiaux consécutifs, le nombre de positions géométriques déployées possibles peut être plus élevé. Bien entendu, le nombre et la disposition des éléments saillants doivent être en correspondance avec le nombre et la disposition angulaire des évidements axiaux.

On notera qu'un nombre et des agencements différents d'éléments saillants et d'évidements axiaux peuvent être envisagés dans d'autres configurations. En particulier, un seul ou deux éléments saillants peuvent être envisagés avec le même nombre et la même disposition ou orientation angulaire d'évidements axiaux ou avec un nombre et une disposition ou orientation angulaire différents. À titre d'exemple, la configuration minimale comporte un élément saillant et deux évidements axiaux. Les différentes configurations possibles de l'accouplement axial bras-support basées sur le nombre et la disposition ou orientation angulaire des éléments saillants et évidements axiaux définissent les différentes positions géométriques possibles que peut adopter le bras lors d'un mouvement de pivotement. À cet effet, on notera qu'une pluralité de positions géométriques possibles pour le déploiement du bras permet d'offrir une grande modularité pour les zones d'accroché possibles des objets dans le coffre, selon les besoins de l'utilisateur.

Comme représenté sur la figure 7A, chaque élément saillant, par exemple en forme d'ergot, présente de manière générale une disposition radiale par rapport à la trajectoire circulaire sur laquelle les éléments sont agencés. Chaque élément saillant comporte deux faces opposées, par exemple 68a et 68b pour l'élément 68 (il en est de même pour les autres éléments saillants), qui sont toutes deux inclinées en direction du sommet de l'élément saillant, ici 68c, qui correspond à l'extrémité libre de ce dernier, de manière à former chacune une rampe destinée à coopérer avec une face correspondante de l'évidement axial disposé en regard. Les pentes/rampe présentent une orientation radiale relativement à la trajectoire circulaire suivant laquelle les éléments saillants sont distribués. La première pente 68a s'étend à partir du sommet sur la quasi-totalité de la hauteur de l'élément saillant, tandis que la deuxième pente 68b s'étend à partir du sommet sur une fraction de cette hauteur. La première pente 68a sert à déverrouiller débrayer le bras en cas d'effort trop important sur ce dernier afin d'éviter une détérioration du mécanisme. La deuxième pente 68b est, quant à elle, utilisée pour faciliter le positionnement d'un évidement axial sur l'élément saillant et donc le verrouillage en position basse.

La figure 8 représente les différentes phases (a) à (d) de mise en mouvement du bras :
- phase montante ou de soulèvement du bras pour son déverrouillage à partir de la position basse rangée et au cours de laquelle l'évidement axial 74 s'écarte de l'élément saillant 68 (position a) ; cette phase est obtenue par un soulèvement du bras effectué par l'utilisateur qui a pour effet de comprimer le ressort 28 des figures 4A-B ;
- phase de pivotement ou de rotation de 90°du bras en position déverrouillée (position b) ; ce mouvement est effectué par l'utilisateur ;
- phase descendante du bras pour obtenir son verrouillage dans la position déployée à 90°où l'élément saillant 68 s'engage da ns l'évidement axial 72 après rotation du bras (position c) ; une fois que l'évidement axial est positionné au-dessus d'un élément saillant, l'effort de compression du ressort 28 qui tend à exercer sur ce dernier un effort vertical descendant permet au bras de redescendre naturellement ;
- verrouillage du bras par accouplement axial de ce dernier avec la portion inférieure 22 du support 20, l'élément saillant 68 étant complètement engagé dans l'évidement axial 72 et il en est de même pour les autres éléments saillants dans les évidements axiaux en correspondance géométrique (position d).

Comme représenté plus particulièrement sur la figure 8, les différentes pentes/rampes 68a et 68b et le sommet 68c de l'élément saillant 68 sont utilisés de la manière suivante :
- position (a) : le soulèvement du bras par l'utilisateur a pour conséquence de provoquer le glissement du bord inférieur 74a sur la pente 68a en regard afin de faciliter le désengagement de l'élément saillant 68 de l'évidement axial correspondant 74 et donc le désaccouplement du bras du support ;
- position (b) : lors de la rotation du bras la face inférieure 80 du palier (figure 7B) glisse sur les sommets des éléments saillants, notamment le sommet 68c de l'élément saillant 68, guidant ainsi le mouvement de rotation jusqu'à la position de verrouillage suivante ;
- position (c) : dès que l'évidement axial 72 se retrouve au-dessus de l'élément saillant 68, l'effort naturel de détente du ressort comprimait 28 tend à pousser vers le bas le bras 18 et donc à faire descendre l'évidement axial 72 pour qu'il coiffe l'élément 68 ; lors de ce mouvement vertical descendant un chanfrein 72a de l'évidement axial entre d'abord en contact avec la pente/rampe 68b de l'élément saillant, ce qui facilite le positionnement de l'évidement axial autour de l'élément saillant et donc le verrouillage en position basse (tout ce qui vient d'être décrit à propos de l'élément saillant 68 avec les évidements axiaux 74 et 72 s'appliquent de manière identique avec des autres couples élément saillants évidements axiaux non représentés ici) ;
- position (d) : l'évidement axial 72 coiffe complètement l'élément saillant 68 et le bras est en position verrouillée sur le support ; on notera sur cette figure que les formes respectives de l'élément saillant et de l'évidement axial ne sont pas complètement complémentaires l'une de l'autre et présentent certaines différences.

Le mécanisme qui vient d'être décrit permet donc de verrouiller de manière particulièrement fiable le bras en position rangée et en position déployée, de le déverrouiller très simplement par soulèvement et de le faire pivoter jusqu'à la position géométrique suivante disponible afin de le verrouiller dans une autre position basse, ceci avec une configuration d'éléments saillants et d'évidements axiaux (ces éléments forment des crans de verrouillage) qui facilitent les différentes phases de déverrouillage, de pivotement et de verrouillage des éléments les uns par rapport aux autres. Les pentes ou rampes de ces crans de verrouillage sont conçues de manière à maîtriser l'effort de retenue et à générer un déverrouillage du bras sans détériorer ce dernier.

On notera que la configuration d'un tel bras et son mécanisme de déploiement ou de rangement peuvent également s'appliquer à une paroi de l'habitacle du véhicule.

## Revendications

1. Véhicule (10) comprenant un coffre (12) et un habitacle qui comprennent chacun une ou plusieurs parois verticales ou sensiblement verticales (14) délimitant partiellement l'espace interne audit coffre et audit habitacle, **caractérisé en ce qu'**au moins un bras (18) est monté sur une paroi du coffre et/ou de l'habitacle et est apte à passer d'une position rangée contre ladite paroi à au moins une position déployée qui fait saillie par rapport à ladite paroi (14) ou inversement, le passage d'une position à l'autre étant effectué par un soulèvement dudit au moins un bras le long d'un axe vertical ou sensiblement vertical, suivi d'un pivotement autour dudit axe, ledit au moins un bras comprenant des moyens d'accrochage (18d-e) destinés à fixer un ou plusieurs objets.

2. Véhicule selon la revendication 1, **caractérisé en ce que** ledit au moins un bras est monté sur la paroi par l'intermédiaire d'un ensemble mécanique comprenant au moins une pièce élastiquement déformable (28) qui exerce un effort axial vertical descendant de rappel, tendant à maintenir axialement ledit au moins un bras en position basse verrouillée, le passage d'une position à l'autre nécessitant d'exercer un effort axial ascendant externe de déverrouillage de manière à compenser ledit effort axial de rappel et à soulever ledit au moins un bras avant d'exercer un mouvement de pivotement.

3. Véhicule selon la revendication 2, **caractérisé en ce que** la paroi comporte un support (20) sur lequel ledit au moins un bras (18) est monté en appui vertical dans une position basse verrouillée, ledit au moins bras étant accouplé axialement avec ledit support dans ladite position basse verrouillée par l'intermédiaire d'une liaison mécanique de type tenon-mortaise d'axe vertical ou sensiblement vertical qui empêche le pivotement dudit au moins un bras par rapport au support, l'effort axial ascendant de déverrouillage permettant de désaccoupler axialement ledit au moins bras du support et ainsi d'autoriser un pivotement par rapport audit support avant de pouvoir le verrouiller dans une autre position basse.

4. Véhicule selon la revendication 3, **caractérisé en ce que** la liaison mécanique de type tenon-mortaise comprend au moins un élément saillant (62,64, 66,68) suivant un axe vertical ou sensiblement vertical qui est solidaire d'une des deux pièces que sont ledit au moins bras (18) et le support (20), ledit au moins un élément saillant étant apte à être engagé axialement dans un évidement axial de l'autre pièce qui est axialement en regard de l'élément saillant parmi plusieurs évidements axiaux (72,74, 76,78) de l'autre pièce, les évidements axiaux étant répartis sur l'autre pièce selon une trajectoire circulaire suivant une vue en projection dans un plan perpendiculaire à l'axe vertical ou sensiblement vertical, l'écart angulaire entre deux évidements axiaux consécutifs définissant l'angle de pivotement dudit au moins un bras entre deux positions consécutives de ce dernier.

5. Véhicule selon la revendication 4, **caractérisé en ce que** ledit au moins un élément saillant (62,64, 66,68) comporte deux faces opposées (68a,68b) qui s'étendent globalement en éloignement axial de la pièce qui porte ledit au moins un élément saillant et possèdent chacune une disposition radiale relativement à la répartition circulaire des évidements axiaux (72,74, 76,78), chacune des deux faces opposées étant inclinée en direction de leur extrémité libre de manière à former au moins une rampe (68a,68b) destinée à coopérer avec une face correspondante de l'évidement axial en regard de l'autre pièce.

6. Véhicule selon la revendication 4 ou 5, **caractérisé en ce que** ledit au moins un bras (18) est apte à occuper une position géométrique parmi plusieurs positions géométriques possibles, le nombre et les orientations angulaires des positions géométriques possibles dépendant du nombre et de la position dudit au moins un élément saillant d'une pièce et des évidements axiaux de l'autre pièce.

7. Véhicule selon l'une des revendications 3 à 6, **caractérisé en ce que** le support (20) forme une charnière pour ledit au moins un bras et comporte, d'une part, une première portion inférieure (22) sur laquelle ledit au moins un bras est en appui dans la position basse verrouillée et au niveau de laquelle la liaison de type tenon-mortaise est agencée et, d'autre part, une deuxième portion supérieure (24) disposée à l'aplomb verticalement de la première portion inférieure, ledit au moins un bras (18) étant monté entre les deux portions inférieure et supérieure du support par l'intermédiaire d'une tige axiale (32) qui traverse ledit au moins un bras et dont les deux extrémités opposées (32a,32b) sont respectivement engagées dans les deux portions inférieure et supérieure dudit support.

8. Véhicule selon les revendications 2 et 7, **caractérisé en ce que** la pièce élastiquement déformable (28) est disposée autour ou le long de la tige axiale (32) en prenant appui sur deux surfaces en regard respectivement de la dite tige axiale et dudit au moins un bras de manière à être déformée axialement en compression lorsque ledit au moins un bras subit un effort axial ascendant externe et à s'étendre axialement pour reprendre sa position non déformée lorsque l'effort axial ascendant externe cesse.

9. Véhicule selon l'une des revendications 1 à 8, **caractérisé en ce qu'**une pièce de masquage (40) recouvre la zone de montage dudit au moins un bras (18) sur la paroi, une partie de la pièce de masquage étant ajourée pour permettre sa mise en place autour dudit au moins un bras.

10. Véhicule selon l'une des revendications 1 à 9, **caractérisé en ce qu'**il comporte une interface de fixation (50,52) dudit au moins un bras sur la paroi et la caisse du véhicule.
